# EUROPÄISCHE PATENTANMELDUNG

(11) **EP 2 362 321 A1**
(43) Veröffentlichungstag der Anmeldung: **31.08.2011**
(21) Anmeldenummer: 11001342.2
(22) Anmeldetag: 18.02.2011
(51) Int. Cl.: G06F 21/00

(54) **Verfahren und System zum Erkennen einer Schadsoftware**

(30) Priorität: 18.02.2010 DE 102010008538
(71) Anmelder: Zynamics GmbH, 44787 Bochum (DE)
(72) Erfinder: Dullien, Thomas, 44787 Bochum (DE)
(74) Vertreter: Sparing, Rolf Klaus

(57) **Zusammenfassung**

Die Erfindung betrifft ein Verfahren zum Erkennen einer Schadsoftware in einem Computerspeichersystem, das eine zuverlässige Erkennung von Schadsoftware ermöglicht und das keine zuverlässige Umgehung durch Erzeugung bisher unbekannten Maschinencodes zulässt, umfassend die Schritte Bereitstellen einer eine Anzahl von Bytesequenzen umfassenden Mastersignatur, Erzeugen wenigstens einer ersten Teilsignatur, die eine Teilmenge der Anzahl der Bytesequenzen der Mastersignatur umfasst, und Anwenden der ersten Teilsignatur auf in dem Computerspeichersystem gespeicherte Daten, um eine in dem Computerspeichersystem gespeicherte Schadsoftware zu erkennen.

## Beschreibung

Die Erfindung betrifft ein Verfahren zum Erkennen einer Schadsoftware in einem Computerspeichersystem und ein System zum Erkennen einer Schadsoftware in einem entfernten Computerspeichersystem.

Schadsoftware wie sogenannte Computerviren, Computerwürmer, Trojanische Pferde, Spyware oder sonstige vom Betreiber eines Computersystems ungewünschte Software stellt ein erhebliches wirtschaftliches und technisches Problem für moderne Computernetzwerke dar. In der Regel wird Schadsoftware ohne Wissen und Wollen des Betreibers eines Computersystems durch Dritte individuell oder automatisiert in einem zu dem Computersystem gehörenden Computerspeichersystem abgespeichert, um dauerhaft oder zu bestimmter Gelegenheit auf dem Computersystem ausgeführt zu werden. Bei dem Computerspeichersystem kann es sich um jede Form von flüchtigem oder nichtflüchtigem Speicher handeln, insbesondere Arbeitsspeicher (insbesondere Computerspeicher mit wahlfreiem Zugriff, eng. Random access memory bzw. RAM), Festplattenspeicher, Disketten, CD-ROM, DVD-ROM oder ähnliches. Die Schadsoftware ist dabei in der Regel so ausgestaltet, dass sie ohne weiteres für den Betreiber nicht als solche erkennbar ist. Um Schadsoftware in einem Computerspeichersystem zu erkennen und gegebenenfalls zu entfernen bzw. unschädlich zu machen, wird regelmäßig sogenannte Antivirensoftware eingesetzt. Gewöhnlich ist eine Antivirensoftware derart ausgebildet, dass nicht nur Computerviren im engeren Sinne, sondern alle Arten von Schadsoftware wie beispielsweise auch Computerwürmer, Trojanische Pferde, Spyware, etc. erkannt werden.

Schadsoftware ist im Allgemeinen nicht in einem in einer Hochsprache abgefassten Quelltext bekannt, sondern nur in einem direkt von einem Mikroprozessor ausführbaren Maschinencode. Zur Erkennung der Schadsoftware in einem Computerspeichersystem wird bei aus der Praxis bekannten Arten von Antivirensoftware zu jedem bekannten Maschinencode einer Schadsoftware eine diesen Maschinencode charakterisierende Bytesequenz erzeugt, die sogenannte Virensignatur. Die Virensignatur umfasst ausreichende Informationen, um es der Antivirensoftware zu ermöglichen, bei Untersuchung eines Computerspeichersystems zu entscheiden, ob es sich bei einem bestimmten gespeicherten Datenabschnitt um den bekannten, der Virensignatur zugeordneten Maschinencode einer Schadsoftware handelt oder nicht. Die Erzeugung der Virensignatur erfolgt durch den Hersteller der Antivirensoftware auf einem zentralen Computersystem. Anschließend wird die erzeugte Virensignatur per Internet auf entfernte Computersysteme der Benutzer, auf denen die Antivirensoftware lokal installiert ist, übertragen, um in den lokalen Computerspeichersystemen die Erkennung der Schadsoftware zu ermöglichen. Problematisch ist, dass die Erkennung der Schadsoftware nur auf einer Erkennung des bekannten Maschinencodes beruht. Dies wird von Programmierern von Schadsoftware, denen der Quelltext des Schadprogramms zugänglich ist, zur Umgehung der Antivirensoftware ausgenutzt: der Maschinencode der Schadsoftware wird von den Programmierern der Schadsoftware derart abgeändert, dass die Schadsoftware mittels der bekannten Virensignatur von der Antivirensoftware nicht mehr erkannt wird. Dies ist häufig ohne funktionale Änderungen und ohne oder nur mit geringen Änderungen des Quelltextes der Schadsoftware möglich, beispielsweise bereits durch erneute Übersetzung des Quelltextes in einen weiteren ausführbaren Maschinencode unter Verwendung abweichender Compileroptionen. Der Programmierer der Schadsoftware kann dabei anhand der von dem Hersteller bereitgestellten Virensignaturen auf einfache Weise überprüfen, ob der weitere ausführbare Maschinencode der Schadsoftware von der Antivirensoftware erkannt wird oder nicht. Es können mit relativ geringem Aufwand so lange neue Fassungen des ausführbaren Maschinencodes erzeugt werden, bis eine nicht von der Antivirensoftware erkannte Fassung des Maschinencodes geschaffen ist. Auf diese Weise erreichen die Programmierer von Schadsoftware einen zeitlichen Vorsprung vor den Herstellern der Antivirensoftware, da der neu erzeugte Maschinencode der Schadsoftware bis zur Erstellung und Verbreitung einer neuen, entsprechenden Virensignatur von der Antivirussoftware nicht erkannt wird. Problematisch ist weiter, dass die Anzahl der Virensignaturen mit jeder neuen Fassung des Maschinencodes einer an sich bekannten Schadsoftware weiter zunimmt. Da die Virensignaturen von den Herstellern der Antivirensoftware von einem zentralen Computersystem per Internet auf die Vielzahl von entfernten Computersystemen der Benutzer übertragen wird, wächst die benötigte Bandbreite zur Übertragung der Virensignaturen und der benötigte Speicherplatz auf den lokalen Computersystemen der Benutzer für die Virensignaturen stetig an, was entsprechend zu steigenden Kosten führt.

Die Gesamtheit von unterschiedlichen Maschinencodes, die jeweils ausführbare Fassungen einer zumindest funktional weitgehend identischen Schadsoftware bilden, wird nachstehend als Familie von Schadsoftware bezeichnet.

Die Druckschrift "Automatisierte Signaturgenerierung für Malware-Stämme" von Christian Blichmann, Diplomarbeit, Lehrstuhl Informatik VI, Technische Universität Dortmund, 03. Juni 2008, beschreibt ein Verfahren zur Erstellung einer sogenannten Mastersignatur, mittels der voneinander abweichende Maschinencodes einer Schadsoftwarefamilie unter Verwendung nur einer einzelnen Mastersignatur zuverlässig erkennbar sind. Die Erzeugung der Mastersignatur erfolgt durch folgende Schritte: Zunächst wird durch Disassemblierung, d. h. Rückübersetzung aus dem ausführbaren Maschinencode in eine maschinennahe Assemblersprache, eine abstrakte Darstellung des ausführbaren Maschinencodes der Schadsoftware gewonnen. Durch Analyse von Sprunganweisungen werden Informationen über funktionale Zusammenhänge der Schadsoftware gewonnen. Anschließend werden diese Schritte auf weitere Fassungen von ausführbarem Maschinencode angewendet, von denen vermutet wird, dass es sich um Mitglieder der gleichen Schadsoftwarefamilie handelt. Durch Paarvergleich der erzeugten abstrakten Darstellungen werden in jedem Mitglieder der Schadsoftware enthaltene strukturelle Eigenschaften erfasst. In allen bekannten Mitgliedern der Schadsoftwarefamilie identisch vorhandene strukturelle Eigenschaften werden als Informationen in der Mastersignatur erfasst und abgespeichert. Auf diese Weise können mittels nur einer Mastersignatur alle bekannten Fassungen von ausführbarem Maschinencode einer Schadsoftwarefamilie erkannt werden. Darüber hinaus können bisher noch unbekannte Mitglieder der Schadsoftwarefamilie ebenfalls mittels der Mastersignatur erfasst werden, so lange die unbekannten Mitglieder der Schadsoftwarefamilie alle in der Mastersignatur gespeicherten strukturellen Eigenschaften weiterhin aufweisen. Statt einer Vielzahl von Virensignaturen einer Schadsoftwarefamilie ist es somit ausreichend, dass nur die Mastersignatur zur Erkennung von Schadsoftware bereitgestellt wird. Nachteilig ist, dass durch Verteilung der Mastersignatur an die Antivirensoftware es den Programmierern von Schadsoftware weiterhin möglich ist, durch Abwandlung des Maschinencodes bzw. des Quelltextes der Schadsoftware auf relativ einfache Weise durch Versuch und Irrtum so lange neue Abwandlungen des Maschinencodes der Schadsoftware zu erzeugen, bis eine mit Sicherheit von der Antivirensoftware und der Mastersignatur nicht erfassbare Variante des Maschinencodes erzeugt ist. Der Zeitvorsprung der Programmierer der Schadsoftware vor den Herstellern der Antivirensoftware bleibt so gewahrt.

US 2002/0156908 A1 beschreibt ein Verfahren zur Fragmentierung und Übertragung von Internetprotokoll-Datenpaketen über ein Netzwerk. Das Verfahren wird mittels eines Netzwerkprozessors durchgeführt.

Es ist die Aufgabe der Erfindung, ein Verfahren zum Erkennen einer Schadsoftware in einem Computerspeichersystem und ein System zum Erkennen einer Schadsoftware in einem entfernten Computerspeichersystem anzugeben, das eine zuverlässige Erkennung von Schadsoftware ermöglicht und das keine zuverlässige Umgehung durch Erzeugung bisher unbekannten Maschinencodes zulässt.

Diese Aufgabe wird erfindungsgemäß durch ein Verfahren mit den Merkmalen des Anspruchs 1 und durch ein System mit den Merkmalen des Anspruchs 6 gelöst.

Das erfindungsgemäße Verfahren zum Erkennen einer Schadsoftware in einem Computerspeichersystem umfasst die Schritte Bereitstellen einer eine Anzahl von Bytesequenzen umfassenden Mastersignatur, Erzeugen wenigstens einer ersten Teilsignatur, die eine Teilmenge der Anzahl der Bytesequenzen der Mastersignatur umfasst, und Anwenden der ersten Teilsignatur auf in dem Computerspeichersystem gespeicherte Daten, um eine in dem Computerspeichersystem gespeicherte Schadsoftware zu erkennen. Unter einer Bytesequenz wird vorliegend eine geordnete Abfolge von computerlesbaren Daten in Form von Bytes verstanden. Ein Byte als gängige Speichereinheit von Computersystemen kann dabei z.B. in Form einer zweistelligen Hexadezimalzahl dargestellt werden. Es versteht sich, dass eine Bytesequenz durch mathematische Transformation bei gleichbleibendem Informationsinhalt in eine andere Darstellung umwandelbar ist, beispielsweise in eine Bitsequenz. Es versteht sich ferner, dass bei Computersystemen mit einer größeren nativen Speichereinheit (beispielsweise 16, 32 oder 64 Bit) diese Speichereinheit zur Darstellung der Mastersignatur verwendbar ist, wobei die Mastersignatur dann eine geordnete Abfolge von computerlesbaren Daten in Form dieser Speichereinheiten umfasst. Jede Bytesequenz der Mastersignatur umfasst Daten, die einem in jedem bekannten Maschinencode der Schadsoftwarefamilie enthalten Datenabschnitt zugeordnet sind. Da alle Bytesequenzen der Mastersignatur eine Entsprechung von Daten in jedem Mitglied der Schadsoftwarefamilie aufweisen, weisen auch alle Bytesequenzen einer Teilsignatur der Mastersignatur in allen Mitgliedern der Schadsoftwarefamilie eine Entsprechung von Daten auf. Entsprechend ist mit jeder Teilsignatur jedes der bekannten Familienmitglieder der Schadsoftwarefamilie erkennbar. Das Bereitstellen und Anwenden nur einer Teilsignatur der Mastersignatur zur Erkennung von Schadsoftware in einem Computerspeichersystem bietet nun den Vorteil, dass bekannte Mitglieder der Schadsoftwarefamilie weiter sicher erkannt werden. Für einen Programmierer der Schadsoftware ist es jedoch anhand der Teilsignatur nicht mehr möglich, zuverlässig zu beurteilen, ob ein von ihm veränderter Maschinencode weiterhin von der Antivirensoftware erkannt wird oder nicht. Der veränderte Maschinencode wird genau dann nicht mehr von der Antivirensoftware mittels der Teilsignatur erkannt, wenn wenigstens eine der Bytesequenzen der Teilsignatur keine Entsprechung mehr in dem geänderten Maschinencode findet. Für die bekannte Teilsignatur ist daher für den Programmierer der Schadsoftware mit Sicherheit bekannt, ob der geänderte Maschinencode von der Antivirensoftware erkannt wird oder nicht. Andere Teilsignaturen der Mastersignatur umfassen jedoch genau die betroffene Bytesequenz nicht und werden daher (sofern keine weitere Bytesequenz betroffen ist) den geänderten Maschinencode weiterhin zuverlässig erkennbar machen. Ohne die vollständige Kenntnis des Mastercodes und eine Änderung des Maschinencodes für jede Bytesequenz des Mastercodes ist es daher für den Programmierer der Schadsoftware unmöglich, die Antivirensoftware zuverlässig zu umgehen. Ein Verwenden von Teilsequenzen erschwert daher das bisher mögliche relativ einfache Umgehen von Antivirensoftware zumindest erheblich.

Zweckmäßig ist die Mastersignatur derart aufgebaut, dass in den Bytesequenzen in geordneter Reihenfolge Daten abgelegt sind, die in dieser Reihenfolge auch in einem von der Schadsoftware belegten Speicherabschnitt eines befallenen Computerspeichersystems aufgefunden werden. Durch Vergleich der in dem Speicherabschnitt des Computerspeichersystems enthaltenen Daten mit den in der Mastersignatur enthaltenen Daten kann so die Schadsoftware erkannt werden. Vorzugsweise ist die Mastersignatur derart aufgebaut, dass sie neben den für das Schadprogramm charakteristischen Daten in Form von Bytesequenzen auch Positionsinformationen für die Daten umfasst. In einer vorteilhaften Anordnung ist die Positionsinformation als zwischen benachbarten Bytesequenzen angeordnetes Byte ausgebildet, dass ein Platzhalterzeichen darstellt. Das Platzhalterzeichen gibt an, dass in dem Maschinencode der Schadsoftware zwischen den Daten, die den zu dem Platzhalterzeichen benachbarten Bytesequenzen entsprechen, beliebige Daten in bestimmter oder beliebiger Länge angeordnet sein können. Es versteht sich, dass ein Platzhalterzeichen auch mit der Bedeutung verwendbar ist, dass nur bestimmte Daten, beliebige Daten bestimmter Länge oder mit einer bestimmten Mindest- oder Höchstlänge oder eine Kombination daraus an der Stelle des Platzhalterzeichens angeordnet sein können. Es versteht sich ferner, dass verschiedene Platzhalterzeichen verwendbar sind, die jeweils eine andere Bedeutung haben, beispielsweise einer beliebigen oder eingeschränkten Menge von Daten, oder eine Datenfolge von beliebiger oder eingeschränkter Länge. Die Mastersignatur ist so vorteilhaft als Abfolge von Bytesequenzen, die durch Platzhalterzeichen beabstandet sind, darstellbar. Mit diesem Aufbau der Mastersignatur sind die charakteristischen Daten einer Schadsoftwarefamilie zuverlässig und flexibel speicherbar.

Aus der Praxis ist bekannt, dass manche Schadprogramme einen Maschinencode mit einem unmittelbar ausführbaren Teil und einem verschlüsselten, nicht unmittelbar ausführbaren Teil umfassen. Die Verschlüsselung kann so gewählt sein, dass bei jedem Aufruf der Schadsoftware ein neuer Schlüssel zum Entschlüsseln benötigt und erzeugt wird, so dass der verschlüsselte Teil des Schadprogramms stets in seiner verschlüsselten Form in veränderter Weise im Computerspeicher abgelegt ist. In dieser Form ist der verschlüsselte Teil einer Erkennung mittels einer Signatur nicht zugänglich. Um trotzdem eine sichere Erkennung des Schadprogramms zu ermöglichen, wird das Schadprogramm in einem gesicherten Computerspeicherabschnitt des betroffenen Computersystems gestartet, um eine Entschlüsselung zu erreichen, wobei zugleich sichergestellt wird, dass die Schadsoftware ihre schadhafte Wirkung nicht entfalten kann. Die auf diese Weise entschlüsselte Form des Maschinencodes dient zur Erzeugung der Mastersignatur.

Vorteilhaft definiert die Anordnung der Bytesequenzen in der Mastersignatur eine aufsteigende Reihenfolge, wobei zweckmäßig die Bytesequenzen der Teilsignatur in der so definierten Reihenfolge aufsteigend angeordnet sind. Die Reihenfolge der Bytesequenzen in jeder Teilsignatur entspricht so weiterhin der Reihenfolge, in der die zugeordneten Daten auch in dem jeweiligen Maschinencode der Schadsoftware angeordnet sind. Jede Teilsignatur unterscheidet sich von der Mastersignatur im Wesentlichen dadurch, dass einzelne Bytesequenzen ausgelassen sind, die Reihenfolge der übrigen Bytesequenzen jedoch unverändert ist.

Vorzugsweise umfasst das Verfahren weiter den Schritt Anwenden einer weiteren Signatur auf in dem Computerspeichersystem gespeicherte Daten, die als Daten einer Schadsoftware erkannt wurden. Da die erste Teilsignatur gegenüber der Mastersignatur eine verringerte Zahl an Bytesequenzen aufweist, besteht im Vergleich zu einer Anwendung der Mastersignatur ein erhöhtes Risiko, dass eine nicht schädliche Nutzsoftware durch zufällige Entsprechung von Datenbereichen mit den Bytesequenzen der Teilsignatur fälschlich als Schadsoftware erkannt wird. Das Risiko einer falschen Erkennung einer Nutzsoftware als Schadsoftware wird durch ein weiteres Überprüfen mit einer zusätzlichen Signatur verringert.

Vorzugsweise ist die weitere Signatur eine zweite Teilsignatur, wobei die zweite Teilsignatur eine Teilmenge der Anzahl der Bytesequenzen der Mastersignatur umfasst. Dies ermöglicht eine Verringerung des Risikos, eine Nutzsoftware fälschlich als Schadsoftware zu erkennen, ohne dass die gesamte Mastersignatur offengelegt werden müsste. Zweckmäßig umfasst die zweite Teilsignatur wenigstens eine Bytesequenz, die in der ersten Teilsignatur nicht enthalten ist.

Zusätzlich oder Alternativ ist die weitere Signatur eine Positivsignatur zur Erkennung einer fehlerhaft als schädlich erkannten Nutzsoftware. Insbesondere, wenn die potenzielle falsche Erkennung einer Nutzsoftware durch Teilsignaturen oder sogar durch die Mastersignatur bekannt ist, kann durch erstellen einer Positivsignatur, die es erlaubt, die Nutzsoftware von der Schadsoftware sicher unterscheidenden, eine falsche Erkennung der Nutzsoftware als Schadsoftware sicher ausgeschlossen werden.

Das erfindungsgemäße System zum Erkennen einer Schadsoftware in entfernten Computerspeichersystemen, umfasst eine eine Anzahl von Bytesequenzen umfassende Mastersignatur, ein zentrales Computersystem, und wenigstens ein erstes entferntes Computerspeichersystem, wobei in dem zentralen Computersystem eine Gruppe von Teilsignaturen bereitgestellt ist, wobei jede der Teilsignaturen eine individuelle Teilmenge der Anzahl der Bytesequenzen der Mastersignatur umfasst, und wobei wenigstens eine erste Teilsignatur aus der Gruppe der Teilsignaturen von dem zentralen Computersystem an das erste entfernte Computerspeichersystem übertragbar und auf in dem ersten Computerspeichersystem gespeicherte Daten anwendbar ist, um eine in dem ersten Computerspeichersystem gespeicherte Schadsoftware zu erkennen. Wie vorstehend erläutert, ermöglicht das Bereitstellen und Anwenden nur einer Teilsignatur der Mastersignatur vorteilhaft, dass bekannte Mitglieder der Schadsoftwarefamilie sicher erkannt werden. Ebenso werden bisher unbekannte Mitglieder der Schadsoftwarefamilie mittels der Teilsignatur erkannt, wenn sie weiterhin die in der Teilsignatur erfassten charakteristischen Daten aufweisen. Für einen Programmierer der Schadsoftware ist es jedoch anhand der zur Verfügung gestellten Teilsignatur nicht möglich, zuverlässig zu beurteilen, ob ein von ihm veränderter Maschinencode bei Verwendung abweichender Teilsignaturen von der Antivirensoftware erkannt wird oder nicht.

Vorzugsweise ist die erste Teilsignatur nach einem Kriterium aus der Gruppe der Teilsignaturen ausgewählt, wobei das Kriterium wenigstens eines umfasst von Zeitpunkt der Übertragung an das erste Computerspeichersystem, Zeitpunkt einer Übertragungsanfrage des ersten Computerspeichersystems an das zentrale Computersystem, Zugehörigkeit des ersten Computerspeichersystems zu einer vordefinierten Nutzergruppe und zufällige Auswahl. Durch eine Auswahl der Teilsignatur in Abhängigkeit von dem Zeitpunkt der Übertragung oder der Übertragungsanfrage an das zentrale Computersystem kann gezielt eine Verbreitung sich unterscheidender Teilsignaturen erreicht werden. Die Verbreitung sich unterscheidender Teilsignaturen erhöht für die Programmierer von Schadsoftware die Wahrscheinlichkeit, dass ein neu erstelltes Mitglied einer Schadsoftwarefamilie rasch erkannt und durch Rückmeldung der Antivirensoftware an das zentrale Computersystem in zukünftigen Signaturen berücksichtigt wird. Eine gezielte Auswahl der zu übertragenden Teilsignatur in Abhängigkeit von der Zugehörigkeit des ersten Computerspeichersystems zu einer vordefinierten Nutzergruppe und auch eine teilweise oder vollständig zufällige Auswahl führt zu einer gezielten Verbreitung von sich unterscheidenden Teilsignaturen.

Vorzugsweise umfasst das System wenigstens ein zweites entferntes Computerspeichersystem, wobei wenigstens eine zweite Teilsignatur aus der Gruppe der Teilsignaturen von dem zentralen Computersystem an das zweite entfernte Computerspeichersystem übertragbar ist, und wobei sich die erste Teilsignatur und die zweite Teilsignatur voneinander unterscheiden.

Vorteilhaft wird nach Ablauf eines vorgegebenen Zeitraums die erste Teilsignatur durch Übertragung einer davon abweichenden dritten Teilsignatur an das erste entfernte Computerspeichersystem ersetzt. Durch Ersetzen der Teilsignaturen durch weitere Teilsignaturen wird eine zeitnahe Erkennung von neuen Mitgliedern einer Schadsoftwarefamilie gefördert und die Unsicherheit für Programmierer von Schadsoftware weiter erhöht, da ein scheinbar nicht von der Antivirussoftware erkennbares neues Mitglied der Schadsoftwarefamilie nach relativ kurzer Zeit einem höheren Erkennungsrisiko ausgesetzt ist. Durch das Verteilen unterschiedlicher Teilsignaturen im Zeitverlauf oder an unterschiedliche Nutzergruppen wird auch für die Autoren der Schadsoftware ein vollständiges Zusammenfügen der Teilsignaturen mit dem Ziel der Nachstellung der Mastersignatur stark erschwert.

Zweckmäßig umfasst das System eine Mehrzahl von Mastersignaturen, wobei zu jeder Mastersignatur eine zugeordnete Gruppe von Teilsignaturen bereitgestellt wird. Jede der Mastersignaturen ist dabei zweckmäßig einer separaten Schadsoftwarefamilie zugeordnet.

Weitere Vorteile und Merkmale der Erfindung ergeben sich aus der nachfolgenden Darstellung eines Ausführungsbeispiels der Erfindung.

Die Erfindung wird nachstehend unter Bezugnahme auf die anliegenden Figuren anhand eines Ausführungsbeispiels erläutert.

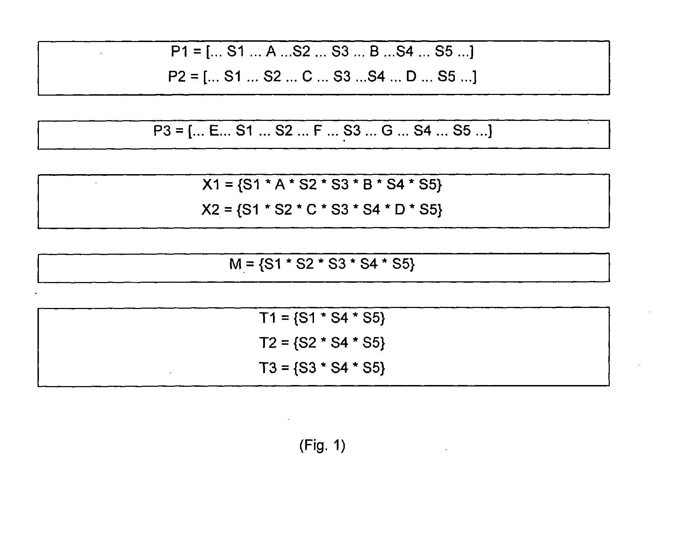

- Fig. 1: zeigt in schematischer Darstellung ein Speicherabbild des Maschinencodes von zwei zu einer Schadsoftwarefamilie gehörenden Schadprogrammen, zu den jeweiligen Schadprogrammen gehörende Virensignaturen, die zu der Schadsoftwarefamilie gehörende Mastersignatur und aus der Mastersignatur abgeleitete Teilsignaturen.

Fig. 1 zeigt im oberen Bereich eine schematische Darstellung des Speicherabbilds des von einem Computersystem direkt ausführbaren Maschinencodes von zwei Schadprogrammen P1, P2. Jedes Speicherabbild besteht aus einer Abfolge von Bytes, in denen jeweils Daten und Anweisungen abgespeichert sind, die insgesamt den Maschinencode des jeweiligen Schadprogramms P1, P2 ausmachen. In der Darstellung bedeutet "..." eine für das Schadprogramm nicht charakteristische Bytefolge, d.h. diese Bytefolge ist jeweils nicht dazu geeignet, das Schadprogramm individuell von anderem Maschinencode, der zu anderen Nutzprogrammen oder Schadprogrammen gehört zu unterscheiden. Die Zeichen "S1", "S2", "S3", "S4", "S5","A" und "B" stehen für charakteristische Bytesequenzen des ersten Schadprogramms P1.

Diese Bytesequenzen sind jeweils geeignet, den Maschinencode des Schadprogramms P1 von dem Maschinencode anderer Nutzprogramme oder Schadprogramme zu unterscheiden. Die Zeichen "S1", "S2", "S3", "S4", "S5", "C" und "D" stehen für charakteristische Bytesequenzen des zweiten Schadprogramms P2. Wie man erkennt, weisen das erste Schadprogramm P1 und das zweite Schadprogramm P2 die charakteristischen Bytesequenzen "S1", "S2", "S3", "S4", "S5" gemeinsam auf.

Unterhalb der Speicherabbilder der Schadprogramme P1, P2 sind in Fig. 1 schematisch Virensignaturen X1, X2 dargestellt. Die erste Virensignatur X1 ist dem ersten Schadprogramm P1 und die zweite Virensignatur X2 dem zweiten Schadprogramm P2 zugeordnet. Wie man erkennt, umfasst die erste Virensignatur X1 die charakteristischen Bytesequenzen "S1", "A", "S2", "S3", "B", "S4", "S5" des ersten Schadprogramms in der in dem ersten Schadprogramm auftretenden Reihenfolge. Die Bytesequenzen sind in der Virensignatur jeweils durch das Platzhalterzeichen "*" getrennt. Dies bedeutet, dass bei einem Vergleich der Virensignatur mit dem Speicherbild eines beliebigen Speicherabschnitts an der Position des Platzhalterzeichens "*" eine beliebige Bytefolge angeordnet sein darf. Ebenso umfasst die zweite Virensignatur X2 die charakteristischen Bytesequenzen "S1", "S2", "C", "S3", "S4", "D", "S5" des zweiten Schadprogramms in der in dem zweiten Schadprogramm auftretenden Reihenfolge. Wie man erkennt, ist die erste Virensignatur X1 durch Vergleich mit dem Speicherabbild des ersten Schadprogramms P1 dazu geeignet, dass erste Schadprogramm P1 zu identifizieren. Eine Erkennung des zweiten Schadprogramms P2 ist mit der ersten Virensignatur X1 hingegen nicht möglich, da die für eine positive Erkennung notwendigen Bytesequenzen "A" und "B" in dem Speicherabbild des zweiten Schadprogramms P2 nicht enthalten sind. Ebenso ist mit der zweiten Virensignatur X2 eine Erkennung des zweiten Schadprogramms P2, nicht aber des ersten Schadprogramms P1 möglich.

Die in Fig. 1 dargestellte Mastersignatur M ist durch Bestimmung der in P1 und P2 gemeinsam enthaltenen charakteristischen Bytesequenzen erstellt worden. Wie man erkennt, umfasst die Mastersignatur M die Bytesequenzen "S1", "S2", "S3", "S4" und "S5", die jeweils durch einen Platzhalter "*" miteinander verbunden sind. Durch Vergleich mit den Speicherabbildern der Schadprogramme P1 und P2 erkennt man, dass die Mastersignatur M dazu geeignet ist, die Schadprogramme P1 und P2 jeweils als Schadsoftware zu erkennen.

In Fig. 1 ist weiter das Speicherabbild eines weiteren, zu der Schadprogrammfamilie gehörigen dritten Schadprogramms P3 dargestellt. Der Maschinencode des dritten Schadprogramms P3 ist bisher nicht in der Mastersignatur M berücksichtigt worden. Der Maschinencode des dritten Schadprogramms P3 enthält, wie man erkennt, zusätzlich zu den charakteristischen Bytesequenzen "S1", "S2", "S3", "S4", "S5" weitere charakteristische Bytesequenzen "E", "F" und "G", die aus dem ersten Schadprogramm P1 und dem zweiten Schadprogramm P2 bisher nicht bekannt waren. Durch Vergleich der Mastersignatur M mit dem Speicherabbild des dritten Schadprogramms P3 erkennt man jedoch, dass auch das bisher unbekannte Schadprogramm P3 sicher erkannt wird, da alle in der Mastersignatur M enthaltenen charakteristischen Bytesequenzen "S1", "S2", "S3", "S4", "S5" auch in dem dritten Schadprogramm P3 enthalten sind.

Würde zur Erkennung der Schadprogramme P1, P2, P3 die Mastersignatur M direkt verwendet werden, würde dies jeweils zu einer sicheren Erkennung der Schadprogramme führen. Nachteilig wäre jedoch, dass der Programmierer der Schadsoftware bei Kenntnis der Mastersignatur M durch Abwandlung der Schadprogramme derart, dass wenigstens eine der charakteristischen Bytesequenzen "S1", "S2", "S3", "S4", "S5" nicht mehr in dem Speicherabbild des Maschinencodes enthalten ist, sofort eine Möglichkeit zur Umgehung der Antivirensoftware erhalten würde. Aus diesem Grund werden aus der Mastersignatur M Teilsignaturen erzeugt, die jeweils eine Teilmenge der Bytesequenzen der Mastersignatur umfassen. In Fig. 1 sind beispielhaft drei Teilsignaturen T1, T2 und T3 dargestellt. Wie man erkennt, ist jede der Teilsignaturen T1, T2 und T3 geeignet, jedes der Schadprogramme P1, P2 und P3 sicher als Schadsoftware zu erkennen. Gleichzeitig ist es bei Kenntnis von nur zwei der Teilsignaturen T1, T2, T3 oder gar nur einer der Teilsignaturen T1, T2, T3 nicht möglich, auf die Mastersignatur M zurückzuschließen. Entsprechend kann durch Verwendung von Teilsignaturen ausgeschlossen werden, dass der Programmierer der Schadsoftware durch einfache Abwandlung des Maschinencodes der Schadsoftware eine sichere Umgehung der Antivirensoftware erreichen kann.

Vorstehend wurde ein vereinfachtes Ausführungsbeispiel der Erfindung beispielhaft erläutert. Bei Anwendung auf real existierende Schadprogramme weist die Mastersignatur eine viel größere Zahl von Bytesequenzen auf, so dass eine entsprechend große Zahl von Teilsignaturen bildbar ist. Ein Rückschließen von den Teilsignaturen auf die Mastersignatur ist so nur mit sehr großem Aufwand und unter großer Unsicherheit möglich.

## Patentansprüche

1. Verfahren zum Erkennen einer Schadsoftware in einem Computerspeichersystem, umfassend die Schritte
Bereitstellen einer eine Anzahl von Bytesequenzen umfassenden Mastersignatur,
Erzeugen wenigstens einer ersten Teilsignatur, die eine Teilmenge der Anzahl der Bytesequenzen der Mastersignatur umfasst,
Anwenden der ersten Teilsignatur auf in dem Computerspeichersystem gespeicherte Daten, um eine in dem Computerspeichersystem gespeicherte Schadsoftware zu erkennen.

2. Verfahren nach Anspruch 1, **dadurch gekennzeichnet, dass** die Anordnung der Bytesequenzen in der Mastersignatur eine aufsteigende Reihenfolge definiert, und dass die Bytesequenzen der Teilsignatur aufsteigend angeordnet sind.

3. Verfahren nach Anspruch 1 oder 2, umfassend den Schritt Anwenden einer weiteren Signatur auf in dem Computerspeichersystem gespeicherte Daten, die als Daten einer Schadsoftware erkannt wurden.

4. Verfahren nach Anspruch 3, **dadurch gekennzeichnet, dass** die weitere Signatur eine zweite Teilsignatur ist, die eine Teilmenge der Anzahl der Bytesequenzen der Mastersignatur umfasst.

5. Verfahren nach Anspruch 3, **dadurch gekennzeichnet, dass** die weitere Signatur eine Positivsignatur zur Erkennung einer fehlerhaft als schädlich erkannten Nutzsoftware ist.

6. System zum Erkennen einer Schadsoftware in entfernten Computerspeichersystemen, umfassend
eine eine Anzahl von Bytesequenzen umfassende Mastersignatur, ein zentrales Computersystem, und
wenigstens ein erstes entferntes Computerspeichersystem, wobei in dem zentralen Computersystem eine Gruppe von Teilsignaturen bereitgestellt ist,
wobei jede der Teilsignaturen eine individuelle Teilmenge der Anzahl der Bytesequenzen der Mastersignatur umfasst,
wobei wenigstens eine erste Teilsignatur aus der Gruppe der Teilsignaturen von dem zentralen Computersystem an das erste entfernte Computerspeichersystem übertragbar und auf in dem ersten Computerspeichersystem gespeicherte Daten anwendbar ist, um eine in dem ersten Computerspeichersystem gespeicherte Schadsoftware zu erkennen.

7. System nach Anspruch 6, **dadurch gekennzeichnet, dass** die erste Teilsignatur nach einem Kriterium aus der Gruppe der Teilsignaturen ausgewählt ist, wobei das Kriterium wenigstens eines umfasst von Zeitpunkt der Übertragung an das erste Computerspeichersystem, Zeitpunkt einer Übertragungsanfrage des ersten Computerspeichersystems an das zentrale Computersystem, Zugehörigkeit des ersten Computerspeichersystems zu einer vordefinierten Nutzergruppe und zufällige Auswahl.

8. System nach Anspruch 6 oder 7, weiter umfassend wenigstens ein zweites entferntes Computerspeichersystem, wobei wenigstens eine zweite Teilsignatur aus der Gruppe der Teilsignaturen von dem zentralen Computersystem an das zweite entfernte Computerspeichersystem übertragbar ist, und wobei sich die erste Teilsignatur und die zweite Teilsignatur voneinander unterscheiden.

9. System nach einem der Ansprüche 6 bis 8, **dadurch gekennzeichnet, dass** nach Ablauf eines vorgegebenen Zeitraums die erste Teilsignatur durch Übertragung einer davon abweichenden dritten Teilsignatur an das erste entfernte Computerspeichersystem ersetzt wird.

10. System nach einem der Ansprüche 6 bis 9, umfassend eine Mehrzahl von Mastersignaturen, wobei zu jeder Mastersignatur eine zugeordnete Gruppe von Teilsignaturen bereitgestellt wird.
